(19) Europäisches Patentamt / European Patent Office / Office européen des brevets

(11) **EP 3 162 540 B1**

(12) **EUROPEAN PATENT SPECIFICATION**

(45) Date of publication and mention
of the grant of the patent:
**22.07.2020 Bulletin 2020/30**

(21) Application number: **15811070.0**

(22) Date of filing: **22.06.2015**

(51) Int Cl.:
**B29C 64/112** *(2017.01)*          **B29C 64/393** *(2017.01)*

(86) International application number:
**PCT/JP2015/067846**

(87) International publication number:
**WO 2015/199019 (30.12.2015 Gazette 2015/52)**

(54) **3D PRINTER AND 3D PRINTING METHOD**

3D-DRUCKER UND 3D-DRUCKVERFAHREN

IMPRIMANTE 3D ET PROCÉDÉ D'IMPRESSION 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2014 JP 2014129693**

(43) Date of publication of application:
**03.05.2017 Bulletin 2017/18**

(73) Proprietor: **Mimaki Engineering Co., Ltd.
Tomi-shi, Nagano 389-0512 (JP)**

(72) Inventors:
• **IKEDA, Akira**
  **Tomi-shi**
  **Nagano 389-0512 (JP)**
• **OHNISHI, Masaru**
  **Tomi-shi**
  **Nagano 389-0512 (JP)**
• **SAKAGUCHI, Ayumi**
  **Tomi-shi**
  **Nagano 389-0512 (JP)**

(74) Representative: **Horn Kleimann Waitzhofer
Patentanwälte PartG mbB
Ganghoferstrasse 29a
80339 München (DE)**

(56) References cited:
**WO-A1-00/52624          WO-A1-2013/167528
JP-A- 2003 048 253      JP-A- 2012 525 766
JP-A- 2013 114 676      JP-A- 2013 147 544
US-A1- 2005 001 878    US-A1- 2013 328 228**

**Description**

TECHNICAL FIELD

The present disclosure relates to a 3D printer and a 3D printing method, and particularly relates to a 3D printer that includes an inkjet head and a 3D printing method.

BACKGROUND ART

Known technologies for shaping a three-dimensional object having a 3D structure include a sheet lamination method, such as that disclosed in Patent Document 1, as well as a melt deposition method (FDM: Fused Deposition Molding), an inkjet method, an inkjet binder method, a stereolithography method (SL: Stereo Lithography), a powder sintering method (SLS: Selective Laser Sintering), and others.

Among these, an inkjet method according to which layers formed by ejecting an ultraviolet curable resin are layered using a 3D printer is extensively used. In this method, first, the exterior design, interior design, mechanism, and the like of an end product are converted into data using a 3D CAD, after that, this data is sliced into multiple layers using a computer, and data regarding cross-sectional shapes of the multiple layers is generated. Then, layers that are formed by ejecting an ultraviolet curable resin from an inkjet head in accordance with the data regarding the cross-sectional shapes are layered (stacked on one another), and thus, a three-dimensional object is manufactured. It is also known that three-dimensional objects that have been shaped using this method are patterned or colored.

CITATION LIST

PATENT DOCUMENTS

Patent Document 1: Japanese Unexamined Patent Application Publication "JP 2003-71530A (laid-open on March 11, 2003)"

WO 2013/167528 A1 discloses a method for printing a three-dimensional structure with a smooth surface comprising the steps of depositing multiple droplets of printing material at least partially side by side and one above the other and curing the deposited droplets by light irradiation to build up a three-dimensional pre-structure in a first step, and smoothing at least one surface of the three-dimensional pre-structure by targeted placement of compensation droplets in boundary areas of adjacent deposited droplets and/or in edges of the surface to be smoothed in a second step to build up the three-dimensional structure with a smooth surface.

US 2005/0001878 A1 discloses a printing apparatus, a print head, and a printing method with which clear ink can be printed at an appropriate timing.

SUMMARY OF INVENTION

TECHNICAL PROBLEM

However, in most technologies for patterning or coloring of a three-dimensional shaped object that is obtained through shaping using an inkjet method, the surface and the inner surface of the three-dimensional shaped object are patterned or colored. Here, in three-dimensional shaping using a conventionally well-known inkjet method, when the shaping materials themselves are colored with yellow (Y), magenta (M), and cyan (C), unevenness will occur among colored inks of the respective colors because the discharge amount that is discharged in the inkjet method differs from color to color.

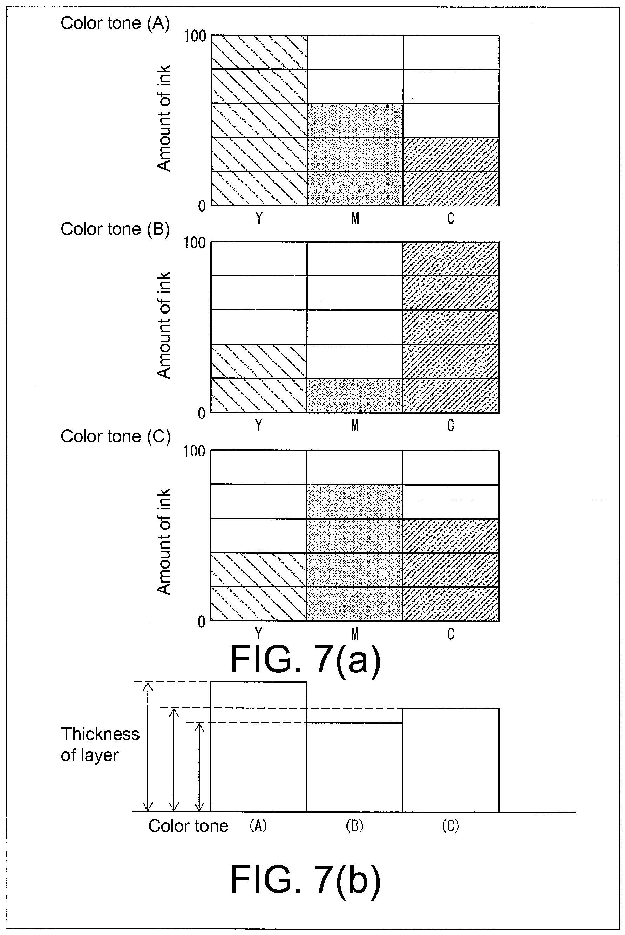

This unevenness will be described using FIG. 7. A case where various color tones are produced by varying the discharge amount of ink of each color (amount of ink) will be described by way of example. If the upper limit of the discharge amount of each color is assumed to be 100, then the color tones A to C shown in FIG. 7(a) have different values, 200, 160, and 180, respectively, for the sum of discharge amounts of ink per unit area. Therefore, as shown in FIG. 7(b), variations in layer thickness occur among layered objects that are formed with the three respective color tones.

Since each layer constituting a shaped object needs to be formed to have a uniform height, clear ink is supplementally discharged to eliminate the unevenness. However, when much clear ink is supplementally discharged to eliminate the unevenness, a height error will occur due to the supplementation with the clear ink, disadvantageously resulting in unevenness of the surface of the resulting shaped object.

Thus, the present disclosure has been made in view of the above-described problem, and it is an object thereof to provide a 3D printer and a 3D printing method according to which a desired color tone can be realized without disadvantageously causing unevenness of the surface of a shaped object.

SOLUTION TO PROBLEM

A 3D printer according to one aspect of the present disclosure is a 3D printer capable of shaping a shaped object by separating color tones into three color components, the 3D printer including: an inkjet head configured to discharge a colored ink that is necessary to realize a predetermined color tone and a supplementary ink for supplementing a height of an ink layer of the colored ink, onto a discharge target surface; and a control unit configured to control the inkjet head, the control unit being configured to control the inkjet head such that, if a color tone that is expressed by mixing equal amounts of two or three colors of the three color components is to be realized, an ink that corresponds to that color tone, out of a plurality of the colored inks that are loaded in advance, is used as the colored ink, and control the inkjet head such that, at locations where the height of an ink layer of the colored ink per unit area of the discharge target surface does not reach a predetermined height, the height of the ink layer of the colored ink is supplemented with the supplementary ink.

With the above-described configuration, a part where the predetermined height is not reached by only the colored ink is supplemented with the supplementary ink, so that the height of the ink layer of the colored ink can be approximated to the predetermined height or can be made equal to the predetermined height. Therefore, for example, even when there is a difference in colored ink layer thickness between color tones, the difference in thickness can be eliminated. Here, in the 3D printer according to the present disclosure, the degree of unevenness among the colored inks of respective colors can be reduced by realizing a color tone that can be realized by a secondary color or a ternary color, using a single color of ink, and thus the height that is to be made up for by the supplementary ink can be suppressed low. For this reason, a height error due to supplementation with the supplementary ink can be suppressed, and a desired color tone can be realized without disadvantageously causing unevenness of the surface of the shaped object.

Moreover, in the 3D printer according to the present disclosure, a color tone that would be realized by a secondary color or a ternary color in the case of an inkjet head serving as a comparison target can be realized using a single color of ink, and the sum of discharge amounts can also be kept to a minimum of one-third of the sum of discharge amounts of ink that would be discharged in the case of the comparative inkjet head. In this manner, the sum of discharge amounts of ink that is discharged in order to realize a desired color tone can be reduced.

Thus, when attention is paid to each layer constituting the shaped object, the number of colored ink dots per unit area can be reduced by realizing a color tone that can be realized by a secondary color or a ternary color, using a single color of ink. Therefore, the distance between dots onto which colored inks are discharged increases, and during flattening of the formed layer with a roller, colored inks of adjacent dots are less likely to come into contact with each other, and thus, color bleeding can be made unlikely to occur.

Here, since each layer constituting the shaped object needs to be formed to have a uniform height, the supplementary ink is discharged onto any dots onto which no colored ink is discharged. Therefore, during flattening of the formed layer with the roller, the supplementary ink makes it even more unlikely for colored inks to come into contact with each other.

The same effect is achieved regardless of whether printing is performed by stacking colored inks of different colors on one another or printing is performed by arranging colored inks of different colors adjacent to one another. That is to say, when a formed layer is flattened with the roller prior to curing of ink by UV irradiation, the increase in the number of dots onto which the supplementary ink is discharged makes it unlikely for the colored inks to come into contact with each other, and thus, color bleeding can be suppressed.

Moreover, in the 3D printer according to one aspect of the present disclosure, the control unit may include a colored ink determination unit configured to determine a discharge amount of the colored ink that is necessary to realize a predetermined color tone; a judgment unit configured to judge whether or not the height of an ink layer of the colored ink that is formed by discharging the colored ink in the discharge amount that has been determined by the colored ink determination unit reaches the predetermined height; and a calculation unit configured to calculate a supplementing amount of the supplementary ink if, based on a result of judgment by the judgment unit, the height of the ink layer of the colored ink does not reach the predetermined height, the control unit being configured to control the inkjet head such that the supplementing amount of the supplementary ink is discharged.

Moreover, in the 3D printer according to one aspect of the present disclosure, the control unit may be configured to control the inkjet head such that, based on discharge amounts of the colored inks of respective colors that are necessary to realize a predetermined color tone, if information that equal amounts of the colored inks of two or three colors of the three components are to be discharged is contained, an ink that corresponds to a color tone that is expressed by mixing the equal amounts of the colored inks of the two or three colors is discharged as the colored ink. Therefore, a 3D printer that achieves the above-described effects can be provided.

Moreover, in the 3D printer according to one aspect of the present disclosure, the control unit may be configured to control the inkjet head such that a color tone that can be realized by discharging a predetermined total amount $(r)$ of a yellow (Y) ink and a magenta (M) ink in a ratio of 1:1 per unit area of the discharge target surface is realized using a red (R) ink in an amount that is 1/2 of the predetermined amount $(r)$ per unit area of the discharge target surface.

3

With the above-described configuration, the color tone that is expressed by the yellow (Y) ink and the magenta (M) ink can be realized using the red (R) ink in an amount that is 1/2 of the amount of ink that would be used in the case of the comparative inkjet head.

Moreover, in the 3D printer according to one aspect of the present disclosure, the control unit may be configured to control the inkjet head such that a color tone that can be realized by discharging a predetermined total amount (g) of a yellow (Y) ink and a cyan (C) ink in a ratio of 1:1 per unit area of the discharge target surface is realized using a green (G) ink in an amount that is 1/2 of the predetermined amount (g) per unit area of the discharge target surface.

With the above-described configuration, the color tone that is expressed by the yellow (Y) ink and the cyan (C) ink can be realized using the green (G) ink in an amount that is 1/2 of the amount of ink that would be used in the case of the comparative inkjet head.

Moreover, in the 3D printer according to one aspect of the present disclosure, the control unit may be configured to control the inkjet head such that a color tone that can be realized by discharging a predetermined total amount (b) of a cyan (C) ink and a magenta (M) ink in a ratio of 1:1 per unit area of the discharge target surface is realized using a blue (B) ink in an amount that is 1/2 of the predetermined amount (b) per unit area of the discharge target surface.

With the above-described configuration, the color tone that is expressed by the cyan (C) ink and the magenta (M) ink can be realized using the blue (B) ink in an amount that is 1/2 of the amount of ink that would be used in the case of the comparative inkjet head.

Moreover, in the 3D printer according to one aspect of the present disclosure, the control unit may be configured to control the inkjet head such that a color tone that can be realized by discharging a predetermined total amount (k) of a yellow (Y) ink, a magenta (M) ink, and a cyan (C) ink in a ratio of 1:1:1 per unit area of the discharge target surface is realized using a black (K) ink in an amount that is 1/3 of the predetermined amount (k) per unit area of the discharge target surface.

With the above-described configuration, the color tone that is expressed by the yellow (Y) ink, the magenta (M) ink, and the cyan (C) ink can be realized using the black (K) ink in an amount that is 1/3 of the amount of ink that would be used in the case of the comparative inkjet head.

Moreover, a 3D printing method according to another aspect of the present disclosure is a 3D printing method with which a shaped object can be shaped by separating color tones into three color components, the method including the steps of: a discharging step, discharging a colored ink that is necessary to realize a predetermined color tone and a supplementary ink for supplementing a height of an ink layer of the colored ink, onto a discharge target surface using an inkjet head; and a controlling step, controlling the inkjet head, wherein in the controlling step, the inkjet head is controlled such that, if a color tone that is expressed by mixing equal amounts of two or three colors of the three color components is to be realized, an ink that corresponds to that color tone, out of a plurality of the colored inks that are loaded in the inkjet head in advance, is used as the colored ink, and the inkjet head is controlled such that, at locations where the height of an ink layer of the colored ink per unit area of the discharge target surface does not reach a predetermined height, the height of the ink layer of the colored ink is supplemented with the supplementary ink.

With the above-described method, the same effects as those of the 3D printer according to the present disclosure are achieved.

ADVANTAGEOUS EFFECTS OF INVENTION

According to the present disclosure, it is possible to realize a desired color tone without disadvantageously causing unevenness of the surface of a shaped object.

BRIEF DESCRIPTION OF DRAWINGS

FIG. 1 is a perspective view illustrating a configuration of a 3D printer according to an embodiment of the present disclosure.

FIG. 2 illustrates how a layered object (shaped object) is configured that is formed by layering (stacking) ink layers composed of inks that are discharged from an inkjet head according to the embodiment of the present disclosure.

FIGS. 3(a) and 3(b) schematically illustrate color compositions and discharge amounts of colors of ink for expressing the same color tone.

FIGS. 4(a) and 4(b) schematically illustrate color compositions and discharge amounts of colors of ink for expressing the same color tone.

FIGS. 5(a) and 5(b) schematically illustrate color compositions and discharge amounts of colors of ink for expressing the same color tone.

FIG. 6 is a diagram illustrating the thickness of layered objects as a result of supplementation of the height of a colored region with clear ink according to the embodiment of the present disclosure.

FIG. 7 is a diagram for explaining a problem with the related art.

DESCRIPTION OF EMBODIMENTS

Hereinafter, an embodiment of a 3D printer and a 3D printing method according to the present disclosure will be described using the drawings. A 3D printer according to the present embodiment is characterized in that, at locations where the height of an ink layer per unit area of a discharge target surface does not reach a predetermined height when the ink layer is composed of only colored ink, the height of the ink layer is supplemented with supplementary ink. Hereinafter, a configuration in which supplementation with the supplementary ink equalizes ink layer heights of ink layers of any color tones (layers composed of only colored ink or layers composed of colored ink and supplementary ink) will be described. However, the present disclosure is not limited to a configuration in which the ink layer heights are equalized, and it is sufficient if, when the ink layer height differs between color tones in the case where ink layers are composed of only colored ink, the difference can be reduced even slightly. That is to say, configurations in which a difference in height is reduced by the supplementation are also included in the scope of the present disclosure.

Note that, in the present embodiment, the height of an ink layer may also be referred to as the thickness of the ink layer. Moreover, in the present embodiment, the height of an ink layer per unit area of the discharge target surface may also be referred to as the discharge amount of ink per unit area of the discharge target surface. Furthermore, in the present embodiment, the discharge amount or the thickness per unit area of the discharge target surface may also be simply referred to as the discharge amount or the thickness. The discharge amount of ink as used herein means the discharge volume of ink.

(1) Configuration of 3D Printer

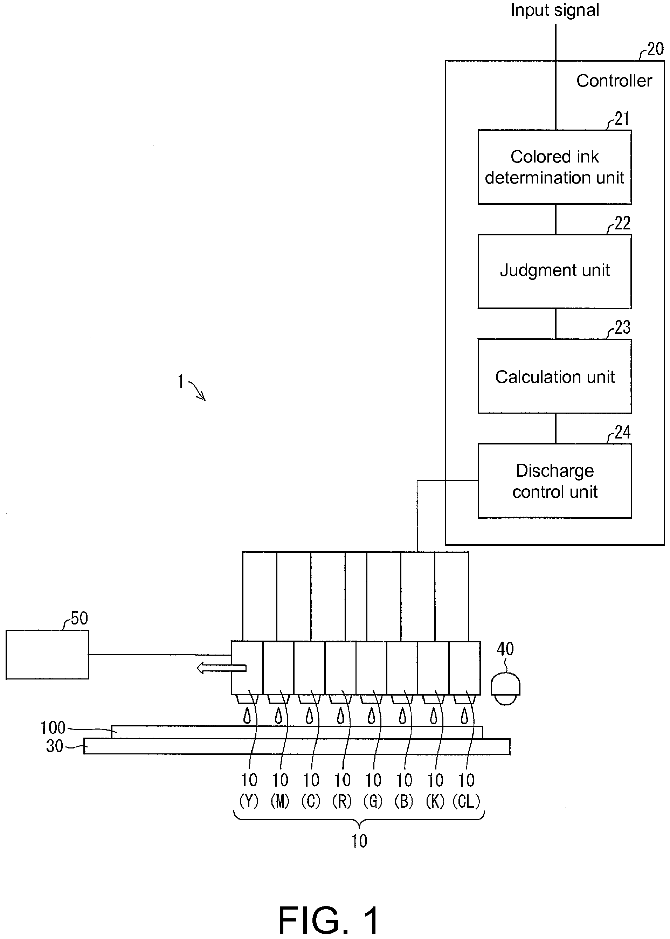

FIG. 1 is a perspective view illustrating a configuration of the 3D printer according to the present embodiment. As illustrated in FIG. 1, a 3D printer 1 includes an inkjet head 10, a controller 20 (control unit), a stage 30, an ultraviolet irradiator 40, and a position moving device 50.

The inkjet head 10 is provided with a head 10(Y) filled with a yellow (Y) ink (colored ink), a head 10(M) filled with a magenta (M) ink (colored ink), a head 10(C) filled with a cyan (C) ink (colored ink), a head 10(R) filled with a red (R) ink (colored ink), a head 10(G) filled with a green (G) ink (colored ink), a head 10(B) filled with a blue (B) ink (colored ink), a head 10(K) filled with a black (K) ink (colored ink), and a head 10(CL) filled with a clear ink (CL) (supplementary ink).

Here, the black (K) ink is an ink that realizes a color tone that can be realized by discharging a predetermined total amount (k) of the yellow (Y) ink, the magenta (M) ink, and the cyan (C) ink in a ratio of 1:1:1 per unit area of the discharge target surface, in an amount that is 1/3 of the predetermined amount (k) per unit area of the discharge target surface.

Also, the red (R) ink is an ink that realizes a color tone that can be realized by discharging a predetermined total amount (r) of the yellow (Y) ink and the magenta (M) ink in a ratio of 1:1 per unit area of the discharge target surface, in an amount that is 1/2 of the predetermined amount (r) per unit area of the discharge target surface.

Also, the green (G) ink is an ink that realizes a color tone that can be realized by discharging a predetermined total amount (g) of the yellow (Y) ink and the cyan (C) ink in a ratio of 1:1 per unit area of the discharge target surface, in an amount that is 1/2 of the predetermined amount (g) per unit area of the discharge target surface.

Also, the blue (B) ink is an ink that realizes a color tone that can be realized by discharging a predetermined total amount (b) of the cyan (C) ink and the magenta (M) ink in a ratio of 1:1 per unit area of the discharge target surface, in an amount that is 1/2 of the predetermined amount (b) per unit area of the discharge target surface.

These heads are arranged in a straight line as illustrated in FIG. 1. The inks that are filled in the respective heads are discharged from nozzle holes, which are not shown, provided on the side facing the stage 30, toward a discharge target surface of a print target 100 that is placed on the stage 30, using an inkjet method under control of the controller 20, which will be described later.

The position moving device 50 is connected to the inkjet head 10 and moves the inkjet head 10 along a direction of the arrow shown in FIG. 1. This direction of movement is the same as the direction in which the eight heads of the inkjet head 10 are arranged. Therefore, as a result of the inkjet head 10 being driven and moved by the position moving device 50 while discharging ink, the eight heads sequentially pass over and discharge ink onto a specific region that is located directly under the inkjet head 10, of the print target 100, and thus, ink layers are layered atop of one another.

Although there is no limitation on the ink that can be used in the 3D printer 1, for example, a UV curable ink (a radical polymerization-type ink, a cationic polymerization-type ink, or an ink obtained by mixing these inks), a latex ink containing water or an organic solvent and a resin that is emulsified or suspended in the water or organic solvent, a solvent UV ink (SUV ink) containing an organic solvent, a solid ink, or other inks with which 3D shaping can be performed through stacked printing can be preferably used.

## (2) Configuration of Layered Object

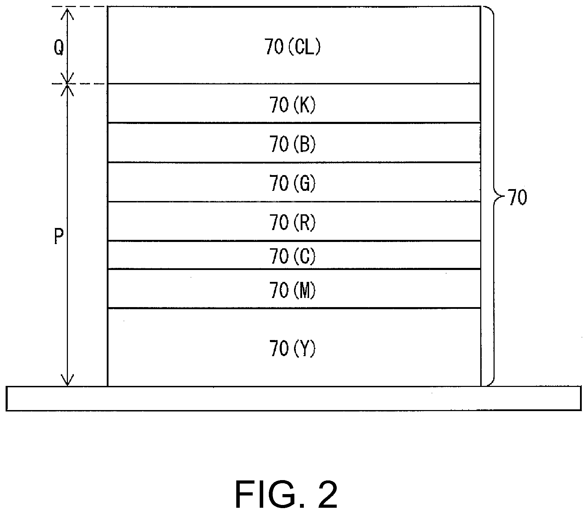

FIG. 2 illustrates how a layered object 70 (shaped object) is configured that is formed by layering ink layers composed of inks that are discharged from the inkjet head 10. As illustrated in FIG. 2, an ink layer 70(M) that is formed of the magenta (M) ink discharged from the head 10(M) is layered on top of an ink layer 70(Y) that is formed of the yellow (Y) ink discharged from the head 10(Y), an ink layer 70(C) that is formed of the cyan (C) ink discharged from the head 10(C) is layered on top of the ink layer 70(M), an ink layer 70(R) that is formed of the red (R) ink discharged from the head 10(R) is layered on top of the ink layer 70(C), an ink layer 70(G) that is formed of the green (G) ink discharged from the head 10(G) is layered on top of the ink layer 70(R), an ink layer 70(B) that is formed of the blue (B) ink discharged from the head 10(B) is layered on top of the ink layer 70(G), an ink layer 70(K) that is formed of the black (K) ink discharged from the head 10(K) is layered on top of the ink layer 70(B), and an ink layer 70(CL) that is formed of the clear ink (CL) discharged from the head 10(CL) is layered on top of the ink layer 70(K).

The layered object 70 illustrated in FIG. 2 has a colored region P that is constituted by the ink layer 70(Y), the ink layer 70(M), the ink layer 70(C), the ink layer 70(R), the ink layer 70(G), the ink layer 70(B), and the ink layer 70(K). The thicknesses of the ink layer 70(Y), the ink layer 70(M), the ink layer 70(C), the ink layer 70(R), the ink layer 70(G), the ink layer 70(B), and the ink layer 70(K) that constitute the colored region P determine the color tone that is exhibited by the colored region P. Note that the ink layer 70(CL), which is formed of the clear ink discharged from the head 10(CL), has no influence on the color tone that is exhibited by the colored region P irrespective of the film thickness (layer thickness) thereof. Accordingly, in other words, it can be said that the color tone of the layered object 70 is determined by the ink layer 70(Y), the ink layer 70(M), the ink layer 70(C), the ink layer 70(R), the ink layer 70(G), the ink layer 70(B), and the ink layer 70(K).

Note that, for illustrative reasons, the layered object illustrated in FIG. 2 shows a state in the case where ink has been discharged from all of the heads; however, actually, only those ink layers that are necessary to express a desired color tone are formed. In other words, depending on the desired color tone, the heads from which ink is to be discharged are determined in advance, and as a result of those heads discharging ink and layering ink layers (there are cases where only a single ink layer is formed), the resulting layered object corresponds to the desired color tone.

## (3) Color Replacement Process

As is well known, using the three colors of ink, yellow (Y), magenta (M), and cyan (C), makes it possible to realize desired color tones by varying the combination of the colors and the combining ratio. However, when the three colors of ink, that is, yellow (Y), magenta (M), and cyan (C) are used, the sum of discharge amounts of inks that are used to realize a desired color tone is relatively large, and therefore, there are cases where colored inks of adjacent dots come into contact with each other, and the colored inks disadvantageously mix with each other, resulting in color bleeding.

To address this issue, in the 3D printer 1 according to the present embodiment, for color tones that are expressed by discharging yellow (Y), magenta (M), and cyan (C), a three-color replacement process in which such a color tone is expressed by discharging the black (K) ink that is loaded in advance is performed; for color tones that are expressed by discharging the yellow (Y) and magenta (M) inks, a two-color replacement process in which such a color tone is expressed by discharging the red (R) ink that is loaded in advance is performed; for color tones that are expressed by discharging the yellow (Y) and cyan (C) inks, a two-color replacement process in which such a color tone is expressed by discharging the green (G) ink that is loaded in advance is performed; and for color tones that are expressed by discharging the cyan (C) and magenta (M) inks, a two-color replacement process in which such a color tone is expressed by discharging the blue (B) ink that is loaded in advance is performed.

Specifically, in the present embodiment, a portion where the ratio of the yellow (Y) ink, the magenta (M) ink, and the cyan (C) ink would be 1:1:1 in the case of an inkjet head serving as a comparison target is replaced with the black (K) ink. As described above, the inkjet head 10 according to the present embodiment is provided with the head 10(K) that is loaded with the black (K) ink, which realizes a color tone that can be realized by discharging the predetermined total amount (k) of the yellow (Y) ink, the magenta (M) ink, and the cyan (C) ink in a ratio of 1:1:1 per unit area of the discharge target surface, in an amount that is 1/3 of the predetermined amount (k) per unit area of the discharge target surface. Therefore, according to the present embodiment, the sum of discharge amounts of ink per unit area that is necessary to express the color tone expressed by yellow (Y), magenta (M), and cyan (C) can be reduced to as little as 1/3 of that in the case where the color tone is expressed using yellow (Y), magenta (M), and cyan (C).

Moreover, in the present embodiment, a portion where the ratio of the yellow (Y) ink and the magenta (M) ink would be 1:1 in the case of the comparative inkjet head is replaced with the red (R) ink. As described above, the inkjet head 10 according to the present embodiment is provided with the head 10(R) that is loaded with the red (R) ink, which realizes a color tone that can be realized by discharging the predetermined total amount (r) of the yellow (Y) ink and the magenta (M) ink in a ratio of 1:1 per unit area of the discharge target surface, in an amount of ink that is 1/2 of the predetermined amount (r) per unit area of the discharge target surface. Therefore, according to the present embodiment, the sum of discharge amounts of ink per unit area that is necessary to express the color tone expressed by yellow (Y) and magenta (M) can be reduced to as little as 1/2 of that in the case where the color tone is expressed using yellow (Y) and magenta (M).

Moreover, in the present embodiment, a portion where the ratio of the yellow (Y) ink and the cyan (C) ink would be 1:1 in the case of the comparative inkjet head is replaced with the green (G) ink. As described above, the inkjet head 10 according to the present embodiment is provided with the head 10(G) that is loaded with the green (G) ink, which realizes a color tone that can be realized by discharging the predetermined total amount (g) of the yellow (Y) ink and the cyan (C) ink in a ratio of 1:1 per unit area of the discharge target surface, in an amount that is 1/2 of the predetermined amount (g) per unit area of the discharge target surface. Therefore, according to the present embodiment, the sum of discharge amounts of ink per unit area that is necessary to express the color tone expressed by yellow (Y) and cyan (C) can be reduced to as little as 1/2 of that in the case where the color tone is expressed using yellow (Y) and cyan (C).

Moreover, in the present embodiment, a portion where the ratio of the cyan (C) ink and the magenta (M) ink would be 1:1 in the case of the comparative inkjet head is replaced with the blue (B) ink. As described above, the inkjet head 10 according to the present embodiment is provided with the head 10(B) that is loaded with the blue (B) ink, which realizes a color tone that can be realized by discharging the predetermined total amount (b) of the cyan (C) ink and the magenta (M) ink in a ratio of 1:1 per unit area of the discharge target surface, in an amount that is 1/2 of the predetermined amount (b) per unit area of the discharge target surface. Therefore, according to the present embodiment, the sum of discharge amounts of ink per unit area that is necessary to express the color tone expressed by cyan (C) and magenta (M) can be reduced to as little as 1/2 of that in the case where the color tone is expressed using cyan (C) and magenta (M).

(4) Specific Examples of Color Replacement Processes

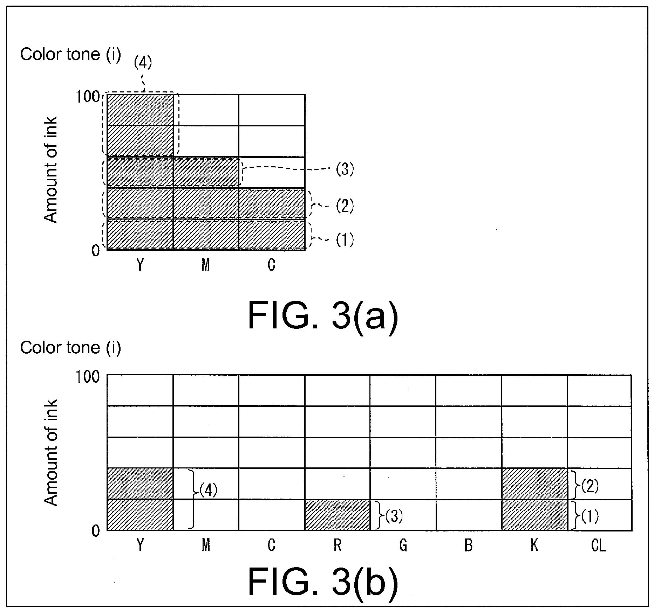

Hereinafter, the effects of the present embodiment will be more specifically described using the color tones illustrated in FIGS. 3 to 5, respectively, by way of example. FIGS. 3(a) and 3(b), FIGS. 4(a) and 4(b), or FIGS. 5(a) and 5(b) schematically illustrate color compositions and discharge amounts of colors of ink for expressing the same color tone. Note that, with regard to the cells illustrated in FIGS. 3(a), 4(a), and 5(a), a single cell indicates that the discharge amount of ink (amount of ink) per unit area of the discharge target surface is 20. The amount of ink "100" shown in FIGS. 3 to 5 represents an upper limit discharge amount per unit area of the discharge target surface that a single head can discharge at one time. That is to say, a configuration is adopted in which each of the heads for the respective colors of ink can discharge a maximum of 100 per unit area of the discharge target surface, and in order to express a desired color tone, the discharge amount is varied within a range whose upper limit is 100.

First, a color tone (i) in FIG. 3 is described by way of example. A part (1) shown in FIG. 3(a) is a portion where the ratio of the yellow (Y) ink, the magenta (M) ink, and the cyan (C) ink would be 1:1:1 in the case of the comparative inkjet head. In this portion, the discharge amount of each of the yellow (Y), magenta (M), and cyan (C) inks is 20, and the sum of the discharge amounts corresponds to 60.

When expressed using the inkjet head 10 according to the present embodiment, this portion corresponds to a portion that is indicated by a part (1) in FIG. 3(b). The part (1) in FIG. 3(b) is a portion where only the black (K) ink is discharged and the discharge amount of ink corresponds to 20. That is to say, according to the present embodiment, the color tone indicated by this part (1) can be realized with a discharge amount of ink that is 1/3 (about 33%) of that in the case of the comparative inkjet head. A part (2) shown in FIG. 3(a) is the same as the part (1).

Moreover, a part (3) shown in FIG. 3(a) is a portion where the ratio of the yellow (Y) ink and the magenta (M) ink would be 1:1 in the case of the comparative inkjet head. In this portion, the discharge amount of each of the yellow (Y) and magenta (M) inks is 20, and the sum of the discharge amounts corresponds to 40.

When expressed using the inkjet head 10 according to the present embodiment, this portion corresponds to a portion that is indicated by a part (3) in FIG. 3(b). The part (3) in FIG. 3(b) is a portion where only the red (R) ink is discharged and the discharge amount of ink corresponds to 20. That is to say, according to the present embodiment, the color tone indicated by this part (3) can be realized with a discharge amount of ink that is 1/2 (50%) of that in the case of the comparative inkjet head.

Note that, in a part (4) shown in FIG. 3(a), yellow (Y) is discharged alone, and thus, according to the present embodiment as well, yellow (Y) is discharged alone in this part (4), and also the discharge amount of ink is 40 as in the case of the comparative inkjet head.

In this manner, according to the present embodiment, due to the three-color replacement process and the two-color replacement process, when the color tone (i) is expressed according to the present embodiment, the sum of discharge amounts of inks that are used can be reduced from 200 to 100 as compared with the case where the color tone (i) is expressed using the comparative inkjet head.

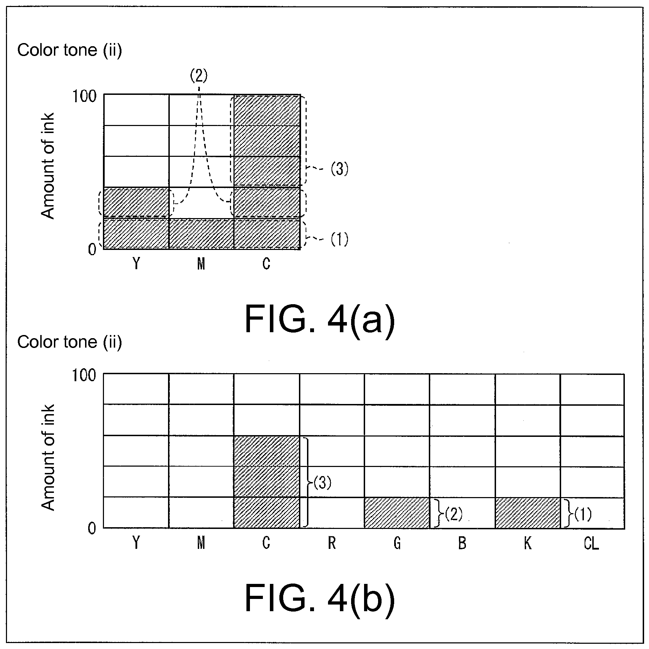

Next, a color tone (ii) is described by way of example. A part (1) shown in FIG. 4(a) is a portion where the ratio of the yellow (Y) ink, the magenta (M) ink, and the cyan (C) ink would be 1:1:1 in the case of the comparative inkjet head. In this portion, the discharge amount of each of the yellow (Y), magenta (M), and cyan (C) inks is 20, and the sum of the discharge amounts corresponds to 60.

When expressed using the inkjet head 10 according to the present embodiment, this portion corresponds to a portion that is indicated by a part (1) in FIG. 4(b). The part (1) in FIG. 4(b) is a portion where only the black (K) ink is discharged and the discharge amount of ink corresponds to 20. That is to say, according to the present embodiment, the color tone indicated by this part (1) can be realized with a discharge amount of ink that is 1/3 (about 33%) of that in the case of the comparative inkjet head.

Moreover, a part (2) shown in FIG. 4(a) is a portion where the ratio of the yellow (Y) ink and the cyan (C) ink would be 1:1 in the case of the comparative inkjet head. In this portion, the discharge amount of each of the yellow (Y) and cyan (C) inks is 20, and the sum of the discharge amounts corresponds to 40.

When expressed using the inkjet head 10 according to the present embodiment, this portion corresponds to a portion that is indicated by a part (2) in FIG. 4(b). The part (2) in FIG. 4(b) is a portion where only the green (G) ink is discharged and the discharge amount of ink corresponds to 20. That is to say, according to the present embodiment, the color tone indicated by this part (2) can be realized with a discharge amount of ink that is 1/2 (50%) of that in the case of the comparative inkjet head.

Note that, in a part (3) shown in FIG. 4(a), cyan (C) is discharged alone, and thus, according to the present embodiment as well, cyan (C) is discharged alone in this part (3), and also the discharge amount of ink is 60 as in the case of the comparative inkjet head.

In this manner, according to the present embodiment, due to the three-color replacement process and the two-color replacement process, when the color tone (ii) is expressed according to the present embodiment, the sum of discharge amounts of inks that are used can be reduced from 160 to 100 as compared with the case where the color tone (ii) is expressed using the comparative inkjet head.

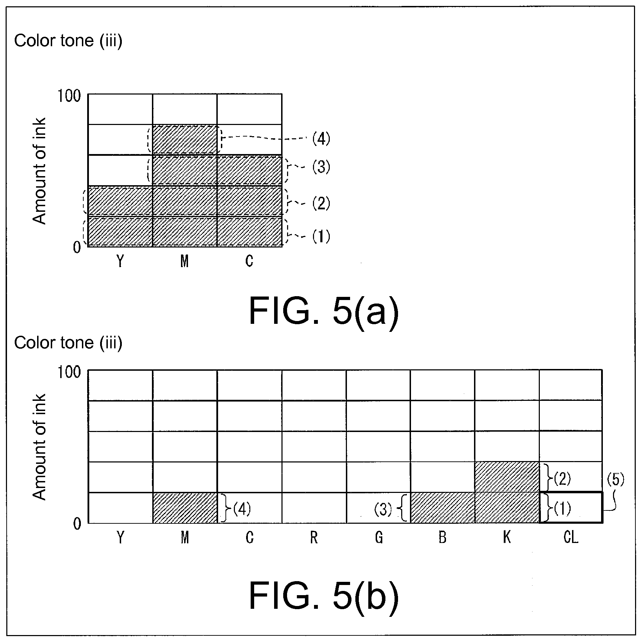

In the following, a color tone (iii) is described by way of example. A part (1) shown in FIG. 5(a) is a portion where the ratio of the yellow (Y) ink, the magenta (M) ink, and the cyan (C) ink would be 1:1:1 in the case of the comparative inkjet head. In this portion, the discharge amount of each of the yellow (Y), magenta (M), and cyan (C) inks is 20, and the sum of the discharge amounts corresponds to 60.

When expressed using the inkjet head 10 according to the present embodiment, this portion corresponds to a portion that is indicated by a part (1) in FIG. 5(b). The part (1) in FIG. 5(b) is a portion where only the black (K) ink is discharged and the discharge amount of ink corresponds to 20. That is to say, according to the present embodiment, the color tone indicated by this part (1) can be realized with a discharge amount of ink that is 1/3 (about 33%) of that in the case of the comparative inkjet head. A part (2) shown in FIG. 5(a) is the same as the part (1).

Moreover, a part (3) shown in FIG. 5(a) is a portion where the ratio of the magenta (M) ink and the cyan (C) ink would be 1:1 in the case of the comparative inkjet head. In this portion, the discharge amount of each of the magenta (M) and cyan (C) inks is 20, and the sum of the discharge amounts corresponds to 40.

When expressed using the inkjet head 10 according to the present embodiment, this portion corresponds to a portion that is indicated by a part (3) in FIG. 5(b). The part (3) in FIG. 5(b) is a portion where only the blue (B) ink is discharged and the discharge amount of ink corresponds to 20. That is to say, according to the present embodiment, the color tone indicated by this part (3) can be realized with a discharge amount of ink that is 1/2 (50%) of that in the case of the comparative inkjet head.

Note that, in a part (4) shown in FIG. 5(a), magenta (M) is discharged alone, and also the discharge amount of this ink is 20, as in the case of the comparative inkjet head.

In this manner, according to the present embodiment, due to the three-color replacement process and the two-color replacement process, when the color tone (iii) is expressed according to the present embodiment, the sum of discharge amounts of inks that are used can be reduced from 180 to 80 as compared with the case where the color tone (iii) is expressed using the comparative inkjet head.

As can be understood from the three-color replacement process and the two-color replacement processes for the color tones (i) to (iii) that have been described above, the maximum of the sum of discharge amounts of inks that would be used by the comparative inkjet head is 300, whereas the maximum of the sum of discharge amounts of inks that are used by the inkjet head 10 according to the present embodiment is 100. Therefore, according to the present embodiment, when compared with the comparative inkjet head, the sum of the discharge amounts of inks that are used can be reduced to a minimum of one-third, and also the sum of the discharge amounts of inks that are used can be kept to 100 or less.

Since the sum of discharge amounts of inks that are discharged in order to realize a desired color tone can be reduced as described above, when attention is paid to each layer constituting the layered object 70, the number of colored ink dots per unit area can be reduced by realizing, using a single color of ink, a color tone that used to be realized by a secondary color or a ternary color. Thus, the distance between dots onto which colored inks are discharged is increased, and during flattening of the formed layer with a roller, the colored inks of adjacent dots are less likely to come into contact with each other, and color bleeding can be made more unlikely to occur.

Here, since each layer constituting the layered object 70 needs to be formed to have a uniform height, the clear ink is discharged onto any dots onto which no colored ink is discharged. Therefore, during flattening of the formed layer with the roller, the clear ink makes it even more unlikely for the colored inks to come into contact with each other.

The same effect is achieved regardless of whether printing is performed by stacking colored inks of different colors on one another or printing is performed by arranging colored inks of different colors adjacent to one another. That is to say, when a formed layer is flattened with the roller prior to curing of ink by UV irradiation, the increase in the number of dots onto which the clear ink is discharged makes it unlikely for colored inks to come into contact with each other, and thus, color bleeding can be suppressed.

(5) Color Replacement Processes Executed by Colored Ink Determination Unit

The above-described three-color replacement process and two-color replacement processes are executed by a colored ink determination unit 21 of the controller 20. The colored ink determination unit 21 determines the discharge amounts of the yellow (Y), magenta (M), and cyan (C) inks based on an input signal that is input from the outside. The colored ink determination unit 21 executes the three-color conversion process and two-color conversion processes based on the determined discharge amounts of the yellow (Y), magenta (M), and cyan (C) inks. "Input signal" refers to information obtained by performing color separation of a black-and-white image or a color image to be printed into the three color components yellow (Y), magenta (M), and cyan (C). Note that although the order of priority of the color replacement processes executed by the colored ink determination unit 21 does not matter, in the present embodiment, it is assumed that the three-color replacement process is given the highest priority, because this makes it possible to effectively reduce the sum of discharge amounts of ink.

The colored ink determination unit 21 executes the three-color replacement process in which the ink of the smallest discharge amount is specified from the discharge amounts of the yellow (Y), magenta (M), and cyan (C) inks, and that specified smallest discharge amounts of the yellow (Y), magenta (M), and cyan (C) inks are replaced with the black (K) ink. Note that in the case where the input signal does not contain any color of yellow (Y), magenta (M), and cyan (C), the two-color replacement processes, which will be described later, are executed without executing the three-color replacement process.

After the three-color replacement process has been executed, the remaining amount of at least one of the yellow (Y), magenta (M), and cyan (C) inks is zero. The controller 20 executes the two-color replacement process in which the ink of the smallest discharge amount is specified again from the remaining two colors of ink, and the specified smallest discharge amounts of the two colors of ink are replaced with the red (R), green (G), or blue (B) ink. Note that if only one color remains after the three-color replacement process, the two-color replacement process is not executed.

Based on the data that is produced by the colored ink determination unit 21 by executing the three-color replacement process and the two-color replacement process, at locations where the height of an ink layer per unit area of the discharge target surface does not reach a predetermined height when the ink layer is composed of only colored ink, the controller 20 supplements the height of the ink layer with the supplementary ink. This will be described in detail below.

(6) Method for Controlling Discharge Amount

Here, according to the present embodiment, the colored region P of a desired color tone is formed, and the height of the colored region P is supplemented with the supplementary region Q formed of the clear ink to make the thicknesses of the layered objects 70 uniform irrespective of the color tone. That is to say, although the thicknesses of the colored regions P shown in FIG. 2 may vary depending on the color tone, the thicknesses of the layered objects 70 are set to a predetermined thickness (predetermined height) irrespective of the color tone by adjusting the thickness of the supplementary region Q formed of the clear ink.

Since the thickness of each ink layer is determined by the discharge amount from each head in FIG. 1, in the present embodiment, if the predetermined thickness is not reached by only the colored inks for forming the colored region P, the thickness of the colored region P is supplemented with the clear ink for forming the supplementary region Q, and in this manner, regardless of the color tones of layered objects 70 that are to be formed, the sum of discharge amounts of ink per unit area of the discharge target surface is equalized. That is to say, the discharge amounts of respective inks constituting a layered object 70 fulfill the relationship below:

$$I_O = I_Y + I_M + I_C + I_R + I_B + I_G + I_K + I_{CL}$$

where $I_O$ represents the sum of discharge amounts of ink per unit area of the discharge target surface;

$I_Y$ represents the discharge amount of the ink (Y) per unit area of the discharge target surface;

$I_M$ represents the discharge amount of the ink (M) per unit area of the discharge target surface;

$I_C$ represents the discharge amount of the ink (C) per unit area of the discharge target surface;

$I_R$ represents the discharge amount of the ink (R) per unit area of the discharge target surface;

$I_B$ represents the discharge amount of the ink (B) per unit area of the discharge target surface;

$I_G$ represents the discharge amount of the ink (G) per unit area of the discharge target surface;

$I_K$ represents the discharge amount of the ink (K) per unit area of the discharge target surface; and

$I_{CL}$ represents the discharge amount of the clear ink (CL) per unit area of the discharge target surface.

It is the controller 20 that determines the discharge amount of each ink. Hereinafter, a method according to which the controller 20 controls the discharge amount will be described.

As illustrated in FIG. 1, the controller 20 has the colored ink determination unit 21, a judgment unit 22, a calculation unit 23, and a discharge control unit 24. Information regarding a predetermined discharge amount of ink for setting the thickness of each layered object 70 to the predetermined thickness irrespective of the color tone is stored in the controller 20 in advance, acquired by the controller 20 from the outside, or input by an operator, for example, and thus, the controller 20 is able to execute processing using the predetermined discharge amount.

In the present embodiment, the "predetermined thickness (predetermined height)" is the sum of the heights of ink layers of respective colors per unit area of the discharge target surface when the inkjet head 10 has discharged a maximum discharge amount of ink. Note that the maximum discharge amount refers to the largest discharge amount that may be discharged by the inkjet head 10, and differs from the upper limit of the discharge amount (upper limit discharge amount) that the inkjet head 10 is capable of discharging. That is to say, the "predetermined discharge amount" for setting the thickness of each layered object 70 to the predetermined thickness irrespective of the color tone is the maximum discharge amount that is discharged by the inkjet head 10. As described above, the maximum of discharge amount of ink that is used by the inkjet head 10 according to the present embodiment is 100. Accordingly, the maximum discharge amount of the inkjet head 10, that is, the predetermined discharge amount is 100.

First, the colored ink determination unit 21 determines the discharge amounts of yellow (Y), magenta (M), cyan (C), red (R), green (G), blue (B), and black (K) that are necessary to realize a predetermined color tone, based on data that has been generated by executing the three-color replacement process and the two-color replacement processes.

The judgment unit 22 judges whether or not the sum of the discharge amounts of the respective colors of ink that have been determined by the colored ink determination unit 21 reaches the predetermined discharge amount. Here, in the cases of the color tone (i) in FIG. 3 and the color tone (ii) in FIG. 4, the judgment unit 22 judges that the predetermined discharge amount (100) is reached, because the sum of the discharge amounts of ink is 100. On the other hand, in the case of the color tone (iii) in FIG. 5, the judgment unit 22 judges that the predetermined discharge amount (100) is not reached, because the sum of the discharge amounts of ink is 80. The result of judgment by the judgment unit 22 is output to the calculation unit 23.

Next, based on the result of judgment by the judgment unit 22, if the sum of the discharge amounts of the respective colors of ink does not reach the predetermined discharge amount, the calculation unit 23 calculates a shortfall in ink. In the case of the color tone (iii) in FIG. 5, the calculation unit 23 subtracts 80, which is the sum of the discharge amounts of the respective colors of ink, from 100, which is the predetermined discharge amount, to obtain 20 as the shortfall. The calculation result is output to the discharge control unit 24.

Next, the discharge control unit 24 supplements the clear ink in an amount that corresponds to the shortfall calculated by the calculation unit 23 to make up for the shortfall. In the case of the color tone (iii) in FIG. 5, the discharge control unit 24 controls the individual heads such that the head 10(M) discharges the magenta (M) ink in an amount of 20, the head 10(B) discharges the blue (B) ink in an amount of 20, and the head 10(K) discharges the black (K) ink in an amount of 40, and controls the head 10(CL) such that the head 10(CL) discharges the clear ink (CL) in an amount of 20, which is the shortfall calculated by the calculation unit 23 (portion indicated by a part (5) in FIG. 5(b)). The heads of the inkjet head 10 discharge the respective colors of ink under control of the discharge control unit 24.

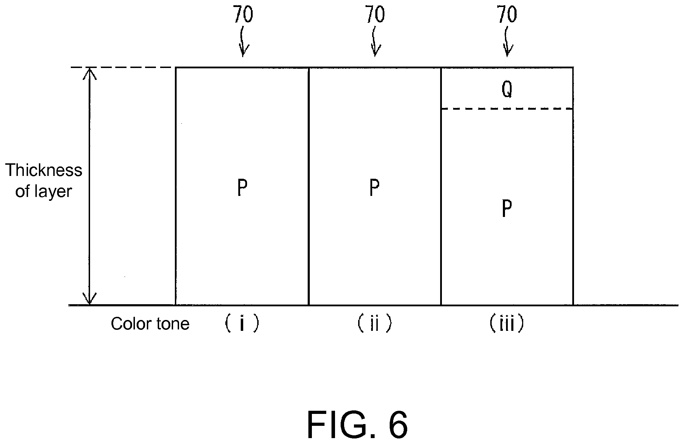

FIG. 6 illustrates the thickness of the layered objects 70 as a result of supplementing the height of the colored region P with the clear ink. As illustrated in FIG. 6, in each of the cases of the color tone (i) in FIG. 3 and the color tone (ii) in FIG. 4, since the colored region P has the predetermined height, there is no need to supplement the height of the colored region P with the clear ink, and the layered object 70 is composed of only the colored region P. On the other hand, in the case of the color tone (iii) in FIG. 5, since the colored region P does not reach the predetermined height, the shortfall in height is made up for by the clear ink, and the layered object 70 is composed of the colored region P and the supplementary region Q. Thus, even though the layered objects 70 have different color tones from one another, equal amounts of ink are discharged, and therefore, the layered objects 70 have an equal thickness irrespective of the color tone.

Here, with the 3D printer 1, the degree of unevenness among colored inks of respective colors can be reduced by realizing a color tone that would be realized by a secondary color or a ternary color, using a single color of ink, and therefore, the height to be made up for by the clear ink can be suppressed low. Thus, a height error due to supplementation with the clear ink can be suppressed, and a desired color tone can be realized without disadvantageously causing unevenness of the surfaces of the layered objects 70.

(7) Additional Items

A 3D printer 1 according to one aspect of the present disclosure is a 3D printer 1 capable of shaping a shaped object by separating color tones into three color components, the 3D printer 1 including: an inkjet head 10 configured to discharge a colored ink that is necessary to realize a predetermined color tone and a supplementary ink for supplementing a height of an ink layer of the colored ink, onto a discharge target surface; and a control unit (controller 20) configured to control the inkjet head 10, the control unit being configured to control the inkjet head 10 such that, if a color tone that is expressed by mixing equal amounts of two or three colors of the three color components is to be realized, an ink that corresponds to that color tone, out of a plurality of the colored inks that are loaded in advance, is used as the colored ink, and control the inkjet head 10 such that, at locations where the height of an ink layer of the colored ink per unit area of the discharge target surface does not reach a predetermined height, the height of the ink layer of the colored ink is supplemented with the supplementary ink.

With the above-described configuration, a part where the predetermined height is not reached by only the colored ink is supplemented with the supplementary ink, so that the height of the ink layer of the colored ink can be approximated to the predetermined height or can be made equal to the predetermined height. Therefore, for example, even when there is a difference in colored ink layer thickness between color tones, the difference in thickness can be eliminated. Here, with the 3D printer according to the present disclosure, the degree of unevenness among the colored inks of respective colors can be reduced by realizing a color tone that can be realized by a secondary color or a ternary color, using a single color of ink, and thus the height that is to be made up for by the supplementary ink can be suppressed low. For this reason, a height error due to supplementation with the supplementary ink can be suppressed, and a desired color tone can be realized without disadvantageously causing unevenness of the surface of the shaped object.

Moreover, in the 3D printer 1 according to the present disclosure, a color tone that would be realized by a secondary color or a ternary color in the case of an inkjet head serving as a comparison target can be realized using a single color of ink, and the sum of discharge amounts can also be kept to a minimum of one-third of the sum of discharge amounts of ink that would be discharged in the case of the comparative inkjet head. In this manner, the sum of discharge amounts of inks that are discharged in order to realize a desired color tone can be reduced.

Thus, when attention is paid to each layer constituting the shaped object, the number of colored ink dots per unit area can be reduced by realizing a color tone that can be realized by a secondary color or a ternary color, using a single color of ink. Therefore, the distance between dots onto which colored inks are discharged increases, and during flattening of the formed layer with a roller, colored inks of adjacent dots are less likely to come into contact with each other, and thus, color bleeding can be made unlikely to occur.

Here, since each layer constituting the shaped object needs to be formed to have a uniform height, the supplementary ink is discharged onto any dots onto which no colored ink is discharged. Therefore, during flattening of the formed layer with the roller, the supplementary ink makes it even more unlikely for colored inks to come into contact with each other.

The same effect is achieved regardless of whether printing is performed by stacking colored inks of different colors on one another or printing is performed by arranging colored inks of different colors adjacent to one another. That is to say, when a formed layer is flattened with the roller prior to curing of ink by UV irradiation, the increase in the number of dots onto which the supplementary ink is discharged makes it unlikely for the colored inks to come into contact with each other, and thus, color bleeding can be suppressed.

Moreover, in the 3D printer 1 according to one aspect of the present disclosure, the control unit may include a colored ink determination unit 21 configured to determine a discharge amount of the colored ink that is necessary to realize a predetermined color tone; a judgment unit 22 configured to judge whether or not the height of an ink layer of the colored ink that is formed by discharging the colored ink in the discharge amount that has been determined by the colored ink determination unit reaches the predetermined height; and a calculation unit 23 configured to calculate a supplementing amount of the supplementary ink if, based on a result of judgment by the judgment unit, the height of the ink layer of the colored ink does not reach the predetermined height, the control unit being configured to control the inkjet head such that the supplementing amount of the supplementary ink is discharged.

Moreover, in the 3D printer 1 according to one aspect of the present disclosure, the control unit may be configured to control the inkjet head 10 such that, based on discharge amounts of the colored inks of respective colors that are necessary to realize a predetermined color tone, if information that equal amounts of the colored inks of two or three colors of the three color components are to be discharged is contained, an ink that corresponds to a color tone that is expressed by mixing the equal amounts of the colored inks of the two or three colors is discharged as the colored ink. Therefore, a 3D printer that achieves the above-described effects can be provided.

Moreover, in the 3D printer 1 according to one aspect of the present disclosure, the control unit may be configured to control the inkjet head 10 such that a color tone that can be realized by discharging a predetermined total amount (r) of a yellow (Y) ink and a magenta (M) ink in a ratio of 1:1 per unit area of the discharge target surface is realized using a red (R) ink in an amount that is 1/2 of the predetermined amount (r) per unit area of the discharge target surface.

With the above-described configuration, the color tone that is expressed by the yellow (Y) ink and the magenta (M) ink can be realized using the red (R) ink in an amount that is 1/2 of the amount of ink that would be used in the case of the comparative inkjet head.

Moreover, in the 3D printer 1 according to one aspect of the present disclosure, the control unit may be configured to control the inkjet head 10 such that a color tone that can be realized by discharging a predetermined total amount (g) of a yellow (Y) ink and a cyan (C) ink in a ratio of 1:1 per unit area of the discharge target surface is realized using a green (G) ink in an amount that is 1/2 of the predetermined amount (g) per unit area of the discharge target surface.

With the above-described configuration, the color tone that is expressed by the yellow (Y) ink and the cyan (C) ink can be realized using the green (G) ink in an amount that is 1/2 of the amount of ink that would be used in the case of the comparative inkjet head.

Moreover, in the 3D printer 1 according to one aspect of the present disclosure, the control unit may be configured to control the inkjet head 10 such that a color tone that can be realized by discharging a predetermined total amount (b) of a cyan (C) ink and a magenta (M) ink in a ratio of 1:1 per unit area of the discharge target surface is realized using a blue (B) ink in an amount that is 1/2 of the predetermined amount (b) per unit area of the discharge target surface.

With the above-described configuration, the color tone that is expressed by the cyan (C) ink and the magenta (M) ink can be realized using the blue (B) ink in an amount that is 1/2 of the amount of ink that would be used in the case of the comparative inkjet head.

Moreover, in the 3D printer 1 according to one aspect of the present disclosure, the control unit may be configured to control the inkjet head 10 such that a color tone that can be realized by discharging a predetermined total amount (k) of a yellow (Y) ink, a magenta (M) ink, and a cyan (C) ink in a ratio of 1:1:1 per unit area of the discharge target surface is realized using a black (K) ink in an amount that is 1/3 of the predetermined amount (k) per unit area of the discharge target surface.

With the above-described configuration, the color tone that is expressed by the yellow (Y) ink, the magenta (M) ink, and the cyan (C) ink can be realized using the black (K) ink in an amount that is 1/3 of the amount of ink that would be used in the case of the comparative inkjet head.

Moreover, a 3D printing method according to another aspect of the present disclosure is a 3D printing method with which a shaped object can be shaped by separating color tones into three color components, the method including the steps of: discharging a colored ink that is necessary to realize a predetermined color tone and a supplementary ink for supplementing a height of an ink layer of the colored ink, onto a discharge target surface using an inkjet head 10; and controlling the inkjet head 10, wherein in the controlling step, the inkjet head 10 is controlled such that, if a color tone that is expressed by mixing equal amounts of two or three colors of the three color components is to be realized, an ink that corresponds to that color tone, out of a plurality of the colored inks that are loaded in the inkjet head 10 in advance, is used as the colored ink, and the inkjet head 10 is controlled such that, at locations where the height of an ink layer of the colored ink per unit area of the discharge target surface does not reach a predetermined height, the height of the ink layer of the colored ink is supplemented with the supplementary ink.

With the above-described method, the same effects as those of the 3D printer according to the present disclosure are achieved.

Industrial Applicability

The present disclosure can be widely used for printers that perform full color printing.

LIST OF REFERENCE NUMERALS

| | |
|---|---|
| 1 | 3D printer |
| 10 | Inkjet head |
| 20 | Controller (control unit) |
| 21 | Colored ink determination unit |
| 22 | Judgment unit |
| 23 | Calculation unit |
| 24 | Discharge control unit |
| 30 | Stage |

40      Ultraviolet irradiator
50      Position moving device
70      Layered object
100     Print target

**Claims**

1.  A 3D printer (1) capable of shaping a shaped object by separating color tones into three color components, the 3D printer (1) comprising:

    an inkjet head (10) configured to discharge a colored ink that is necessary to realize a predetermined color tone and a supplementary ink for supplementing a height of an ink layer of the colored ink, onto a discharge target surface; and
    a controller (20) configured to control the inkjet head (10),
    the controller (20) being configured to

    control the inkjet head such that, if a color tone that is expressed by mixing equal amounts of two or three colors of the three color components is to be realized, an ink that corresponds to the color tone out of a plurality of the colored inks that are loaded in advance, is used as the colored ink, and
    control the inkjet head (10) such that, at locations where the height of an ink layer of the colored ink per unit area of the discharge target surface does not reach a predetermined height, the height of the ink layer of the colored ink is supplemented with the supplementary ink.

2.  The 3D printer (1) according to claim 1, wherein the controller (20) comprises:

    a colored ink determination unit (21) configured to determine a discharge amount of the colored ink that is necessary to realize the predetermined color tone;
    a judgment unit (22) configured to judge whether or not the height of an ink layer of the colored ink that is formed by discharging the colored ink in the discharge amount that has been determined by the colored ink determination unit (21) reaches the predetermined height; and
    a calculation unit (23) configured to calculate a supplementing amount of the supplementary ink if, based on a result of judgment by the judgment unit (22), the height of the ink layer of the colored ink does not reach the predetermined height,
    the controller (20) being configured to control the inkjet head (10) such that the supplementing amount of the supplementary ink is discharged.

3.  The 3D printer (1) according to claim 1 or 2, wherein the controller (20) is configured to control the inkjet head (10) such that, based on discharge amounts of the colored inks of respective colors that are necessary to realize the predetermined color tone, if information that equal amounts of the colored inks of two or three colors of the three color components are to be discharged is contained, an ink that corresponds to a color tone that is expressed by mixing the equal amounts of the colored inks of the two or three colors is discharged as the colored ink.

4.  The 3D printer (1) according to claim 3, wherein the controller (20) is configured to control the inkjet head (10) such that a color tone that can be realized by discharging a predetermined total amount (r) of a yellow (Y) ink and a magenta (M) ink in a ratio of 1:1 per unit area of the discharge target surface is realized using a red (R) ink in an amount that is 1/2 of the predetermined total amount (r) per unit area of the discharge target surface.

5.  The 3D printer (1) according to claim 3, wherein the controller (20) is configured to control the inkjet head (10) such that a color tone that can be realized by discharging a predetermined total amount (g) of a yellow (Y) ink and a cyan (C) ink in a ratio of 1:1 per unit area of the discharge target surface is realized using a green (G) ink in an amount that is 1/2 of the predetermined total amount (g) per unit area of the discharge target surface.

6.  The 3D printer (1) according to claim 3, wherein the controller (20) is configured to control the inkjet head (10) such that a color tone that can be realized by discharging a predetermined total amount (b) of a cyan (C) ink and a magenta (M) ink in a ratio of 1:1 per unit area of the discharge target surface is realized using a blue (B) ink in an amount that is 1/2 of the predetermined total amount (b) per unit area of the discharge target surface.

7.  The 3D printer (1) according to claim 3, wherein the controller (20) is configured to control the inkjet head (10) such that a color tone that can be realized by discharging a predetermined total amount (k) of a yellow (Y) ink, a magenta (M) ink, and a cyan (C) ink in a ratio of 1:1:1 per unit area of the discharge target surface is realized using a black (K) ink in an amount that is 1/3 of the predetermined total amount (k) per unit area of the discharge target surface.

8.  A 3D printing method with which a shaped object can be shaped by separating color tones into three color components, the method comprising the steps of:

    a discharging step, discharging a colored ink that is necessary to realize a predetermined color tone and a supplementary ink for supplementing a height of an ink layer of the colored ink, onto a discharge target surface using an inkjet head (10); and
    a controlling step, controlling the inkjet head (10),
    wherein in the controlling step,

    the inkjet head (10) is controlled such that,
    if a color tone that is expressed by mixing equal amounts of two or three colors of the three color components is to be realized, an ink that corresponds to the color tone out of a plurality of the colored inks that are loaded in the inkjet head (10) in advance, is used as the colored ink, and
    at locations where the height of an ink layer of the colored ink per unit area of the discharge target surface does not reach a predetermined height, the height of the ink layer of the colored ink is supplemented with the supplementary ink.

**Patentansprüche**

1.  3D-Drucker (1), der geeignet ist, ein geformtes Objekt durch Trennen von Farbtönen in drei Farbkomponenten zu formen, wobei der 3D-Drucker (1) umfasst:

    einen Tintenstrahlkopf (10), der geeignet ist, eine farbige Tinte, die zum Realisieren eines vorbestimmten Farbtons notwendig ist, und eine Zusatztinte zum Ergänzen einer Höhe einer Tintenschicht der farbigen Tinte auf eine Ausstoßzieloberfläche auszustoßen; und
    eine Steuerung (20), die zur Steuerung des Tintenstrahlkopfes (10) geeignet ist,
    wobei die Steuerung (20) geeignet ist,

    den Tintenstrahlkopf so zu steuern, dass, wenn ein Farbton realisiert werden soll, der durch das Mischen gleicher Mengen von zwei oder drei Farben der drei Farbkomponenten ausgedrückt wird, eine dem Farbton entsprechende Tinte aus einer Vielzahl der im Voraus geladenen farbigen Tinten als die farbige Tinte verwendet wird, und
    den Tintenstrahlkopf (10) so zu steuern, dass an Stellen, an denen die Höhe einer Tintenschicht der farbigen Tinte pro Flächeneinheit der Ausstoßzieloberfläche eine vorbestimmte Höhe nicht erreicht, die Höhe der Tintenschicht der farbigen Tinte mit der Zusatztinte ergänzt wird.

2.  3D-Drucker (1) nach Anspruch 1, wobei die Steuerung (20) umfasst:

    eine Farbtintenbestimmungseinheit (21), die geeignet ist, eine Ausstoßmenge der Farbtinte zu bestimmen, die zum Realisieren des vorbestimmten Farbons notwendig ist;
    eine Beurteilungseinheit (22), die geeignet ist, zu beurteilen, ob die Höhe einer Tintenschicht der farbigen Tinte, die durch Ausstoßen der farbigen Tinte in der durch die Farbtintenbestimmungseinheit (21) bestimmten Ausstoßmenge gebildet wird, die vorbestimmte Höhe erreicht oder nicht; und
    eine Berechnungseinheit (23), die geeignet ist, eine ergänzende Menge an Zusatztinte zu berechnen, falls, basierend auf einem Ergebnis der Beurteilung durch die Beurteilungseinheit (22), die Höhe der Tintenschicht der farbigen Tinte die vorbestimmte Höhe nicht erreicht,
    wobei die Steuerung (20) geeignet ist, den Tintenstrahlkopf (10) so zu steuern, dass die ergänzende Menge an Zusatztinte ausgestoßen wird.

3.  3D-Drucker (1) nach Anspruch 1 oder 2, wobei die Steuerung (20) geeignet ist, den Tintenstrahlkopf (10) so zu steuern, dass auf der Grundlage von Ausstoßmengen der farbigen Tinten der jeweiligen Farben, die zum Realisieren des vorbestimmten Farbtons notwendig sind, falls Information enthalten ist, dass gleiche Mengen der farbigen Tinten von zwei oder drei Farben der drei Farbkomponenten auszustoßen sind, eine Tinte, die einem Farbton entspricht, der durch Mischen der gleichen Mengen der farbigen Tinten der zwei oder drei Farben ausgedrückt wird, als die farbige Tinte ausgestoßen wird.

4. 3D-Drucker (1) nach Anspruch 3, wobei die Steuerung (20) geeignet ist, den Tintenstrahlkopf (10) so zu steuern, dass ein Farbton, der durch Ausstoßen einer vorbestimmten Gesamtmenge (r) einer gelben (Y) Tinte und einer magentafarbenen (M) Tinte in einem Verhältnis von 1:1 pro Flächeneinheit der Ausstoßzieloberfläche realisiert werden kann, indem eine rote (R) Tinte in einer Menge verwendet wird, die die Hälfte der vorbestimmten Gesamtmenge (r) pro Flächeneinheit der Ausstoßzieloberfläche beträgt.

5. 3D-Drucker (1) nach Anspruch 3, wobei die Steuerung (20) geeignet ist, den Tintenstrahlkopf (10) so zu steuern, dass ein Farbton, der durch Ausstoßen einer vorbestimmten Gesamtmenge (g) einer gelben (Y) Tinte und einer cyanfarbenen (C) Tinte in einem Verhältnis von 1:1 pro Flächeneinheit der Ausstoßzieloberfläche realisiert werden kann, indem eine grüne (G) Tinte in einer Menge verwendet wird, die die Hälfte der vorbestimmten Gesamtmenge (g) pro Flächeneinheit der Ausstoßzieloberfläche beträgt.

6. 3D-Drucker (1) nach Anspruch 3, wobei die Steuerung (20) geeignet ist, den Tintenstrahlkopf (10) so zu steuern, dass ein Farbton, der durch Ausstoßen einer vorbestimmten Gesamtmenge (b) einer cyanfarbenen (C) Tinte und einer magentafarbenen (M) Tinte in einem Verhältnis von 1:1 pro Flächeneinheit der Ausstoßzieloberfläche realisiert werden kann, indem eine blaue (B) Tinte in einer Menge verwendet wird, die die Hälfte der vorbestimmten Gesamtmenge (b) pro Flächeneinheit der Ausstoßzieloberfläche beträgt.

7. 3D-Drucker (1) nach Anspruch 3, wobei die Steuerung (20) geeignet ist, den Tintenstrahlkopf (10) so zu steuern, dass ein Farbton, der durch Ausstoßen einer vorbestimmten Gesamtmenge (k) einer gelben (Y) Tinte, einer magentafarbenen (M) Tinte und einer cyanfarbenen (C) Tinte in einem Verhältnis von 1:1:1 pro Flächeneinheit der Ausstoßzieloberfläche realisiert werden kann, indem eine schwarze (K) Tinte in einer Menge verwendet wird, die ein Drittel der vorbestimmten Gesamtmenge (k) pro Flächeneinheit der Ausstoßzieloberfläche beträgt.

8. 3D-Druckverfahren, mit dem ein geformtes Objekt durch Trennen von Farbtönen in drei Farbkomponenten geformt werden kann, wobei das Verfahren die folgenden Schritte umfasst:

   einen Ausstoßschritt, bei dem eine farbige Tinte, die zum Realisieren eines vorbestimmten Farbtons notwendig ist, und eine Zusatztinte zum Ergänzen einer Höhe einer Tintenschicht der farbigen Tinte auf eine Ausstoßzieloberfläche unter Verwendung eines Tintenstrahlkopfes (10) ausgestoßen werden; und
   einen Steuerschritt zum Steuern des Tintenstrahlkopfs (10),
   wobei in dem Steuerschritt,

   der Tintenstrahlkopf (10) so gesteuert wird, dass
   wenn ein Farbton realisiert werden soll, der durch das Mischen gleicher Mengen von zwei oder drei Farben der drei Farbkomponenten ausgedrückt wird, eine dem Farbton entsprechende Tinte aus einer Vielzahl der im Voraus geladenen farbigen Tinten als die farbige Tinte verwendet wird, und
   an Stellen, an denen die Höhe einer Tintenschicht der farbigen Tinte pro Flächeneinheit der Ausstoßzieloberfläche eine vorbestimmte Höhe nicht erreicht, die Höhe der Tintenschicht der farbigen Tinte mit der Zusatztinte ergänzt wird.

**Revendications**

1. Imprimante 3D (1) capable de former un objet formé en séparant des tonalités de couleur en trois composantes de couleur, l'imprimante 3D (1) comprenant :

   une tête à jet d'encre (10) configurée pour décharger une encre colorée qui est nécessaire pour réaliser une tonalité de couleur prédéterminée et une encre supplémentaire pour compléter une hauteur d'une couche d'encre de l'encre colorée, sur une surface cible de décharge ; et
   un contrôleur (20) configuré pour contrôler la tête à jet d'encre (10),
   le contrôleur (20) étant configuré pour

   contrôler la tête à jet d'encre de telle sorte que, si une tonalité de couleur exprimée par le mélange de quantités égales de deux ou trois couleurs des trois composantes de couleur doit être réalisée, une encre correspondant à la tonalité de couleur parmi une pluralité d'encres colorées qui sont chargées à l'avance, soit utilisée comme l'encre colorée, et

contrôler la tête à jet d'encre (10) de telle sorte qu'aux endroits où la hauteur d'une couche d'encre colorée par unité de surface de la cible de décharge n'atteint pas une hauteur prédéterminée, la hauteur de la couche d'encre colorée soit complétée par l'encre supplémentaire.

2. Imprimante 3D (1) selon la revendication 1, dans laquelle le contrôleur (20) comprend :

une unité de détermination de l'encre colorée (21) configurée pour déterminer une quantité de décharge de l'encre colorée qui est nécessaire pour réaliser la tonalité de couleur prédéterminée ;
une unité de jugement (22) configurée pour juger si la hauteur d'une couche d'encre colorée qui est formée en déchargeant l'encre colorée dans la quantité de décharge qui a été déterminée par l'unité de détermination de l'encre colorée (21) atteint ou non la hauteur prédéterminée ; et
une unité de calcul (23) configurée pour calculer une quantité supplémentaire d'encre supplémentaire si, sur la base d'un résultat de jugement de l'unité de jugement (22), la hauteur de la couche d'encre colorée n'atteint pas la hauteur prédéterminée,
le contrôleur (20) étant configuré pour commander la tête à jet d'encre (10) de manière à ce que la quantité d'encre supplémentaire soit déchargée.

3. Imprimante 3D (1) selon la revendication 1 ou 2, dans laquelle le contrôleur (20) est configuré pour commander la tête à jet d'encre (10) de telle sorte que, sur la base des quantités de décharge des encres colorées de couleurs respectives qui sont nécessaires pour réaliser la tonalité de couleur prédéterminée, si des informations selon lesquelles des quantités égales d'encres colorées de deux ou trois couleurs des trois composantes de couleur doivent être déchargées sont contenues, une encre qui correspond à une tonalité de couleur qui est exprimée en mélangeant les quantités égales d'encres colorées des deux ou trois couleurs soit déchargée en tant que l'encre colorée.

4. Imprimante 3D (1) selon la revendication 3, dans laquelle le contrôleur (20) est configuré pour commander la tête à jet d'encre (10) de telle sorte qu'une tonalité de couleur qui peut être réalisée en déchargeant une quantité totale prédéterminée (r) d'une encre jaune (Y) et d'une encre magenta (M) dans un rapport de 1:1 par unité de surface de la surface cible de décharge soit réalisée en utilisant une encre rouge (R) dans une quantité qui est une moitié de la quantité totale prédéterminée (r) par unité de surface de la surface cible de décharge.

5. Imprimante 3D (1) selon la revendication 3, dans laquelle le contrôleur (20) est configuré pour commander la tête à jet d'encre (10) de telle sorte qu'une tonalité de couleur qui peut être réalisée en déchargeant une quantité totale prédéterminée (g) d'une encre jaune (Y) et d'une encre cyan (C) dans un rapport de 1:1 par unité de surface de la surface cible de décharge soit réalisée en utilisant une encre verte (G) dans une quantité qui est une moitié de la quantité totale prédéterminée (g) par unité de surface de la surface cible de décharge.

6. Imprimante 3D (1) selon la revendication 3, dans laquelle le contrôleur (20) est configuré pour commander la tête à jet d'encre (10) de telle sorte qu'une tonalité de couleur qui peut être réalisée en déchargeant une quantité totale prédéterminée (b) d'une encre cyan (C) et d'une encre magenta (M) dans un rapport de 1:1 par unité de surface de la surface cible de décharge soit réalisée en utilisant une encre bleue (B) dans une quantité qui est une moitié de la quantité totale prédéterminée (b) par unité de surface de la surface cible de décharge.

7. Imprimante 3D (1) selon la revendication 3, dans laquelle le contrôleur (20) est configuré pour commander la tête à jet d'encre (10) de telle sorte qu'une tonalité de couleur qui peut être réalisée en déchargeant une quantité totale prédéterminée (k) d'une encre jaune (Y), d'une encre magenta (M) et d'une encre cyan (C) dans un rapport de 1:1:1 par unité de surface de la surface cible de décharge soit réalisée en utilisant une encre noire (K) dans une quantité qui est un tiers de la quantité totale prédéterminée (k) par unité de surface de la surface cible de décharge.

8. Procédé d'impression 3D avec lequel un objet formé peut être formé en séparant des tonalités de couleur en trois composantes de couleur, le procédé comprenant les étapes suivantes :

une étape de décharge, déchargeant une encre colorée qui est nécessaire pour réaliser une tonalité de couleur prédéterminée et une encre supplémentaire pour compléter une hauteur d'une couche d'encre de l'encre colorée, sur une surface cible de décharge en utilisant une tête à jet d'encre (10) ; et
une étape de contrôle comprenant le contrôle de la tête à jet d'encre (10),

dans lequel, dans l'étape de contrôle,

la tête à jet d'encre (10) est contrôlée de telle sorte que,
si une tonalité de couleur exprimée par le mélange de quantités égales de deux ou trois couleurs des trois composantes de couleur doit être réalisée, une encre correspondant à la tonalité de couleur parmi une pluralité d'encres colorées qui sont chargées à l'avance, soit utilisée comme l'encre colorée, et
qu'aux endroits où la hauteur d'une couche d'encre colorée par unité de surface de la cible de décharge n'atteint pas une hauteur prédéterminée, la hauteur de la couche d'encre colorée soit complétée par l'encre supplémentaire.

FIG. 1

Q
P

70 (CL)
70 (K)
70 (B)
70 (G)
70 (R)
70 (C)
70 (M)
70 (Y)

70

# FIG. 2

Color tone (i)

FIG. 3(a)

Color tone (i)

FIG. 3(b)

Color tone (ii)

FIG. 4(a)

Color tone (ii)

FIG. 4(b)

Color tone (iii)

FIG. 5(a)

Color tone (iii)

FIG. 5(b)

FIG. 6

Color tone (A)

Color tone (B)

Color tone (C)

FIG. 7(a)

FIG. 7(b)

**EP 3 162 540 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003071530 A
- WO 2013167528 A1
- US 20050001878 A1